# EUROPEAN PATENT APPLICATION

(11) **EP 1 770 615 A1**
(43) Date of publication of application: **04.04.2007**
(21) Application number: 05745424.1
(22) Date of filing: 11.05.2005
(51) Int. Cl.: G06Q 10/00

(54) **A METHOD OF ANTI-FRAUD FOR CREDIT CARD**

(30) Priority: 14.05.2004 CN 200410037988
(71) Applicant: Wei, Tsung-Hsing, Taipei, Taiwan (TW)
(72) Inventor: Wei, Tsung-Hsing, Taipei, Taiwan (TW)
(74) Representative: Beck, Michael Rudolf
(86) International application number: PCT/CN2005/000655
(87) International publication number: WO 2005/111876

(57) **Abstract**

A method of anti-fraud for credit card applicable to a card-issuer to prevent an issued credit card from being cheated, with the method a cardholder may divide his Maximum Credit Line given by the card-issuer into a small predetermined amount over Internet and only release the small predetermined amount to his credit card for purchase usage successively, if credit card was stolen or a card fraud occurred, the cardholder could set his Operating Credit Line to zero over internet immediately, so that the cardholder's loss or the card-issuer's loss is minimized and the risk of being cheated is the lowest.

## Description

### BACKGROUND OF THE PRESENT INVENTION

### 1. Field of the Invention

This invention relates to a method of anti-fraud for credit card, more particularly to a method applicable to a card-issuer to prevent an issued credit card from fraud and to substantially minimize the risk of being cheated.

### 2. Description of the Prior Art

Every single credit card contents big credit money granted by card-issuers. A cardholder bringing his card for shopping looks like bringing a big money bag on the street. It will cause theft abuse easily.

Cardholder identity authentication and transaction irrevocable are both quite weak in a credit card transaction. It makes a wide gap for card fraud. The usual ways of issuer to prevent card fraud, as following:
1. Card-issuers take 24 or 48 hours fraud liability before card loss reported.
   This kind cut throat competition will not lead any card fraudulent elimination. It is just transferring risk to member merchants and insurance companies at all. It is also causing consumers ignorance of card's safety.
2. To promote smart card with IC chip to prevent card fraud.
   But, read out data within a chip is not difficult for a high-tech hiker. Once a chip on the smart card is read, much more personal data exposed and much more money lost.
3. Card-issuers improve firewall of data warehouse.
4. In some webs, a special digital ID key word is required.
5. Intensive online approving monitoring.
   But, there are many empty windows period occurred.
6. Intensive data encryption on ISP.
7. Number of stuffs who will work with customer's private data are restricted.

There are many very fine and sophisticated inventions presented. Most of them will heavily invest on terminal equipment or not easy to work. Such as:
1. United States Patent No.5,509,083 (April 16, 1996) discloses a method and apparatus for confirming the identity of an individual presenting an identification card;
2. United States Patent No.5,538,291 (July 23, 1996) discloses a kind of anti-theft credit card;
3. United States Patent No.5,648,647 (July 15, 1997) discloses an Anti-fraud credit card dispatch system;
4. United States Patent No.5,955,961 (September 21, 1999) discloses a kind of programmable transaction card;
5. US Publication Application No.20010053239 (December 20, 2001) discloses a credit card fraud elimination system;
6. US Publication Application No.20020046055 (April 18, 2002) discloses a biometric verification system and method for internet services;
7. US Publication Application No.20020099648 (July 25, 2002) discloses a method of reducing fraud in credit card and other E-business.

Nevertheless, all prior art mentioned above have a common characteristic about endless fighting to felonious parties on high technologies. As for the situation of big money exposed on a credit card, has no any changing.

### Words Definitions:

### Maximum Credit Line:

"Maximum Credit Line" represents a total amount granted by a card-issuer which depends on card applicant's personal financial status.

### Operating Credit Line:

"Operating Credit Line" is a new created word that indicated a small predetermined amount which comes from dividing cardholder's Maximum Credit Line arbitrarily (for example: one tenth) by cardholder. This line is the highest usable money or Usable Credit line at that moment contented with card which sufficiently offers for cardholder's a couple days' consuming. When a purchase made, a consume-approval computer owned by the card-issuer will approve purchase amount lower than Operating Credit Line, other then his Maximum Credit Line.

### Usable Credit:

"Usable Credit" is also a new created word that indicates the residue of his "Operating Credit Line" after the latest purchase made. It is the residual Usable Credit or money of Operating Credit Line at that moment.

As usual, the whole Maximum Credit Line is all usable for a common credit card all the time. In the present invention model, the residue of Maximum Credit Line was divided to usable portion and unusable portion. The unusable portion will be converted to usable state successively by cardholder's management.

### SUMMARY OF THE PRESENT INVENTION

The primary object of the invention is to provide a method of anti-fraud for credit card which is applicable to a card-issuer or creditor to prevent an issued credit card from being cheated; the key point of the invented method is disclosed to divide a big Maximum Credit Line granted from a card-issuer or creditor into a small or low predetermined amount Operating Credit Line for regularly purchase usage via real-time interactive function over internet, so that a cardholder who is applied to the invented method may separately and successively release money credit to a credit card with a small or low predetermined amount time after time, as a result, if credit card stolen, cardholder can set the Operating Credit Line to zero over internet immediately, and the cardholder's loss or the card-issuer's loss is minimized and the risk of being cheated is the lowest.

The invented method of anti-fraud for credit card primarily comprises the following steps:
(a) a card-issuer granting a Maximum Credit Line to a cardholder, and establishing a web page of Personal Credit Management Panel for the cardholder on card-issuer's web;
(b) the cardholder enter the web page of Personal Credit Management Panel established in step (a) to divide the Maximum Credit Line or the residual of Maximum Credit Line into a small or low predetermined amount which is set as an Operating Credit Line for consuming usage separately and successively;
(c) with merchant's consume-approving request, a consume-approval computer owned by the card-issuer is to calculate if the cardholder's residual of Operating Credit Line (or called Usable Credit) is lower than requested amount of consuming or is exhausted; if the residual is really lower or exhausted, the request denied and the credit card not usable; and
   if the residual is still higher, the request approved and the consume-approval computer is regulated by the Operating Credit Line set in step (b) for consuming usage; and
(d) if Usable Credit consumed, cardholder re-executing step (b) to fill-up consumed Usable Credit by Operating Credit Line, or to amend his Operating Credit Line higher or lower in any time; and
   if card stolen, the cardholder urgently enter his web page of Personal Credit Management Panel via internet everywhere and amend his personal Operating Credit Line to zero to prevent from card fraud.

Accordingly, the invented method has the following purposes:
1. Cardholder manages his own Operating Credit Line so that it may perfectly match his changing buying patterns.
2. Cardholder controls the line of consume-approving operation.
3. Prevent or minimize any type of credit card stolen loss.
4. Minimize card fraudulent crime incentives drastically.
5. All three parties (i.e. buyer, seller and issuer) for a transaction will keep not increasing any cost, and the transaction procedure, approving time and equipment of card reader will be keep unchanged and running smoothly as usual.

### BRIEF DESCRIPTION OF THE DRAWINGS

FIG. 1 is a diagram drawing of the invention, showing the procedure of a cardholder creating and managing his Operating Credit Line, and the procedure of anti-fraud method.
FIG. 2 is a simulated sample home pages of a cardholder's "Personal Credit Management Panel", at the moment, the cardholder's residue Usable Credit is US$58.
FIG. 3 is a simulated sample home pages of a cardholder's "Personal Credit Management Panel" after button of "Credit Re-fillup" clicked; which Cardholder's Usable Credit is restored to set line US$2000, increasing US$1942, and the corresponding residual Maximum Credit Line lowered from UD$13,709 to US$11,767, and then the consume-approving computer's line is restored to US$2000.
FIG. 4 is another simulated sample home pages of a cardholder's "Personal Credit Management Panel" after button of "Credit Re-fillup" clicked; which Cardholder's Usable Credit is restored to US$2058, increasing US$2000, and in contrast, corresponding residual Maximum Credit Line lowered from UD$13709 to US$11,709, and then the consume-approving computer's line is restored to US$2058.

### DETAILED DESCRIPTION OF THE PREFERED EMBODIMENTS

The invention discloses a method of anti-fraud for credit card which is applicable to a card-issuer (hereinafter referred to as a creditor) to prevent an issued credit card from being cheated. In particularly, if a card fraud occurred, cardholder's loss minimized, member merchant's loss minimized, creditor's loss minimized, and law suits among transaction three parties (i.e. buyer, seller and issuer) minimized.

The invented method of anti-fraud for credit card is adapted to a credit card which is issued by international processors including VISA, MasterCard, JCB, AMERICAN EXPRESS, Diners Club, Carte Blanche, Enroute, Discover, local bank issuers, and those cards with credit function such as charge card, debt card and transfer card.

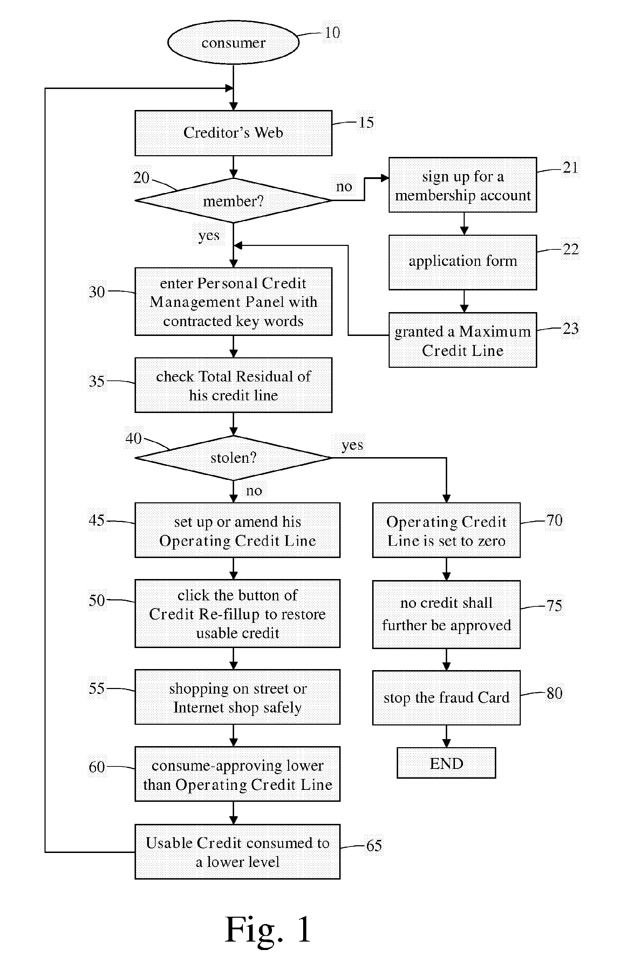

Referred to Fig. 1, the invented method of anti-fraud for credit card comprises the following steps:
(a) a creditor granting a Maximum Credit Line to a cardholder, and establishing a web page of Personal Credit Management Panel for the cardholder on creditor's web;
   wherein on the web page of Personal Credit Management Panel in step (a) further comprises:
   (a1) a current residual of Maximum Credit Line;
   (a2) a blank column of Operating Credit Line for cardholder placing command on creditor's consume-approval computer; and
   (a3) a current residual Usable Credit under the Operating Credit Line after a purchase made.
(b) the cardholder enter the web page of Personal Credit Management Panel established in step (a) to divide the Maximum Credit Line or the residual of Maximum Credit Line into a small or low predetermined amount which is set as an Operating Credit Line for consuming usage separately and successively;
   wherein the cardholder to execute step (b) is through the means including his desk personal computer, smart mobile phone hand sets, notebook computers or PDA over internet, and, if the creditor is required with one or multiple account name and pass words or digital ID or their mix for one or more identity authentication, the cardholder must sign in web page of Personal Credit Management Panel with his registered specified pass words, for example, sing in a contracted account name and pass words, a specified mobile phone number or specified desktop phone number as a registered specified pass words.
(c) with merchant's consume-approving request, a consume-approval computer owned by the creditor is to calculate if the cardholder's residual of Operating Credit Line (or called Usable Credit) is lower than requested amount of consuming or is exhausted; if the residual is really lower or exhausted, the request denied and the credit card not usable; and
   if the residual is still higher, the request approved and the consume-approval computer is regulated by the Operating Credit Line set in step (b) for consuming usage; and
(d) if Usable Credit consumed, cardholder re-executing step (b) to fill-up consumed Usable Credit by Operating Credit Line, or to amend his Operating Credit Line higher or lower in any time; and
(e) if card stolen, the cardholder executes step (d) urgently enter his web page of Personal Credit Management Panel via internet everywhere and amend his personal Operating Credit Line to zero to prevent from card fraud.

The invented method of anti-fraud for credit card is further discussed with drawings as a practical example, referring to Fig. 1 a consumer (10) goes to a creditor's web (15) with his internet access devices such as a desktop personal computer, a notebook computer, a PDA or a smart mobile phone handset etc.

If the consumer (10) is not a member of cardholder (20) to this creditor, he must sign up for a membership account (21) online or offline with a credit card application form (22) first. After the customer (10) has been granted a Maximum Credit Line (23) from creditor and received his credit card, he becomes a member of the creditor.

If the cardholder (20) now enters his account's Personal Credit Management Panel (30) issued from the creditor with his contracted key words. First, the cardholder (20) takes a glance on his Maximum Credit Line (23) granted by the creditor and checks the Total Residual of his Maximum Credit Line (35). And then, set up or amend his Operating Credit Line (45) according to his expected consuming tonight.

This Operating Credit Line (45) is the credit by arbitrarily dividing cardholder's Maximum Credit Line (23) to a small predetermined purchase amount, for example one tenth or one twentieth of the Maximum Credit Line (23), which amount is suitably for the cardholder (20) to bring out with him for shopping tonight or for a couple of days. This line is the highest usable money or Usable Credit line at that moment contented with card which sufficient offer for the cardholder (20) for a couple days' consuming.

When the cardholder (20) first time enter the Personal Credit Management Panel (30), his Maximum Credit Line (23) is intact and current Usable Credit is zero. After the cardholder (20) keys in and sets a number on Operating Credit Line (45) and click the button of Credit Re-fillup (50), the Usable Credit becomes the set amount of Operating Credit Line (45). His total residual credit is decreased in that amount at the same time.
The cardholder (20) now exit and close his Personal Credit Management Panel (30), he may go to shopping on street or on internet shop (55) safely. When a purchase made, a creditor's consume-approving computer owned by the creditor will approve if purchase amount is lower than Operating Credit Line (60), other than his Maximum Credit Line (23).

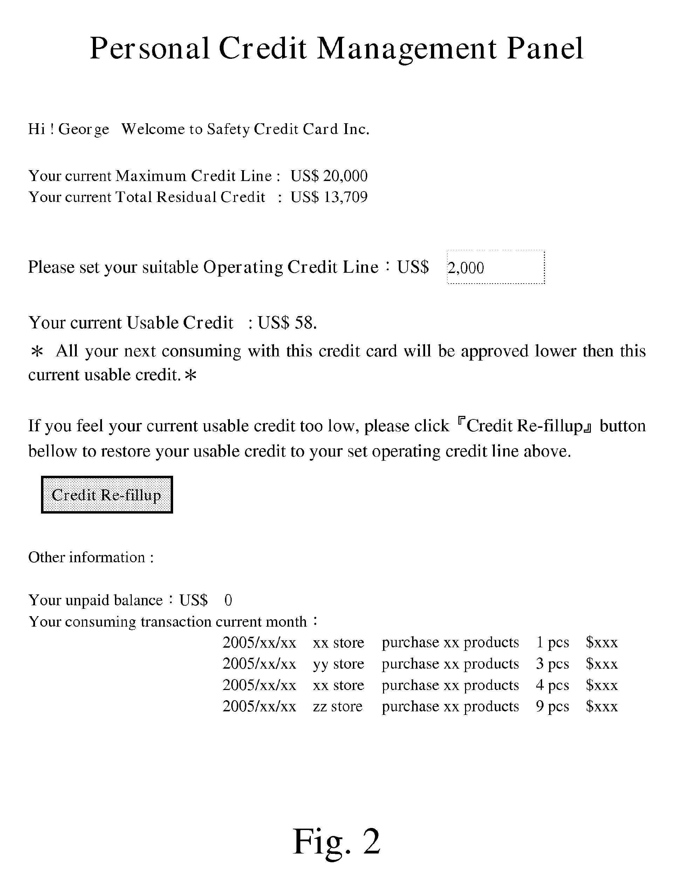

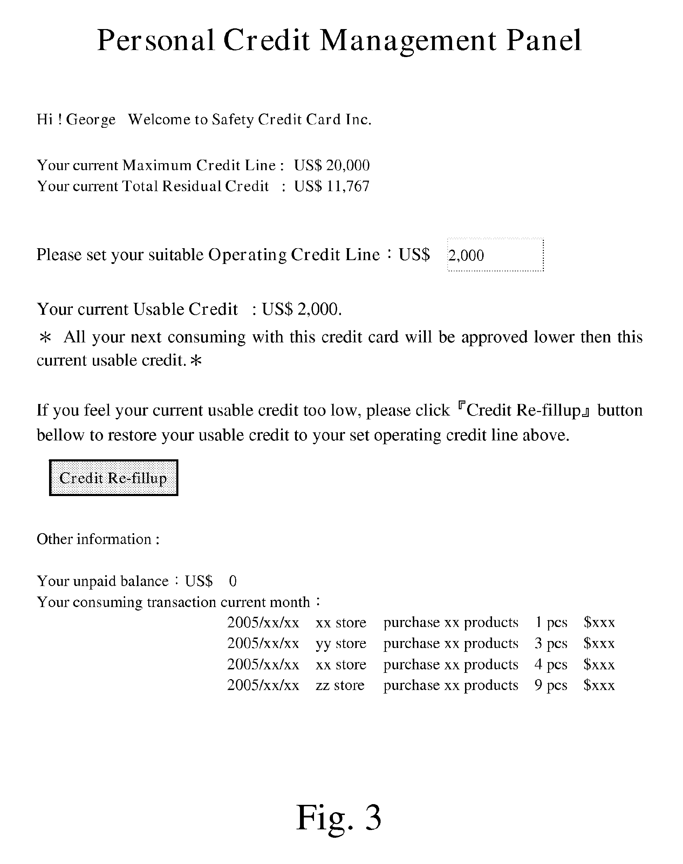

Few days later, if the cardholder's Usable Credit was consumed to a lower level (65), for example as US$58 as shown in Fig. 2, he may go back to his Personal Credit Management Panel (30) again with his internet access devices. After the button of Credit Re-fillup (50) clicked, the Usable Credit restored to the set amount of Operating Credit Line (45) again, for example as US$2,000 as shown in Fig. 3. As a result, his Total Residual Credit is decreased at the same time again.

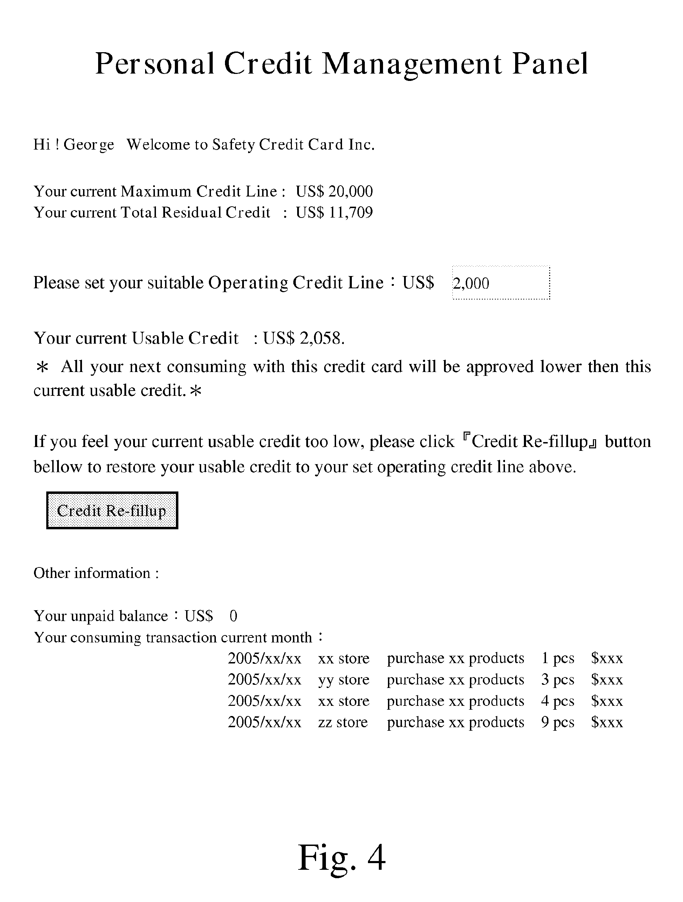

But, an alternative example as shown in Fig. 4 is to have the Usable Credit restored to the sum of current residual Usable Credit plus the amount of Operating Credit Line, for example as US$2,058 as shown in Fig. 4.

Referred to Fig. 1, the cardholder (20) may repeat above process time by time, until his Maximum Credit Line (23) exhausted. Of course, after the cardholder (20) pays the current charge bill in full or in a portion, the total residual credit is restored at that amount.

One day, if the card is stolen unfortunately, the cardholder (20) could rapidly go to his Personal Credit Management Panel (30) with his internet access device via internet everywhere to amend his personal Operating Credit Line. If the cardholder (20) amended his personal Operating Credit Line to zero (70), the creditor's purchase-approving computer will have no credit to approve for any purchase (75) and then will have no any card fraud occurring (80).

In particular, if cardholder's action to amend his personal Operating Credit Line to zero is later than thief does, the card fraud loss is only the residual of Operating Credit Line (for example 1/10 or 1/20 of the Maximum Credit Line), due to not whole credit line, so that the criminal profit will be quite little. The crime incentive is eliminated at all.

Peoples may say that it will be troublesome to go back his Personal Credit Management Panel every few days. Actually, modem peoples' workings, amusement, recreation, all were structured over internet. Just like checking his wallet before he goes out for shopping, cardholder clicks a link and goes to his Personal Credit Management Panel to check his credit with one minute before off duty from office. It will become a routine activity everyday with all new modem peoples.

As to elder cardholders not familiar with internet, they may letter authorize creditor to restore his Usable Credit to Operating Credit Line every fixed period of days automatically. By this way, it will drastically decrease exposed credit and also keep convenience for the card.

As described above, the invented method of anti-fraud for credit card is a totally new model of consume-approving operation for a creditor and also a totally new model of consuming way for consumer. By this easy and very low cost way, card fraud prevented and a peaceful world of minimizing law suits established.

## Claims

1. A method of anti-fraud for credit card applicable to a creditor to prevent an issued credit card from being cheated, **characterized in that** the method comprises the following steps:
(a) the creditor granting a Maximum Credit Line to a cardholder and establishing a web page of Personal Credit Management Panel for the cardholder on creditor's web;
(b) the cardholder enter the web page of Personal Credit Management Panel established in step (a) to divide the Maximum Credit Line or the residual of Maximum Credit Line into a small predetermined amount which is set as an Operating Credit Line for consuming usage separately and successively;
(c) with merchant's consume-approving request, a consume-approval computer owned by the creditor is to calculate if the cardholder's residual of Operating Credit Line (or called Usable Credit) is lower than the requested amount of consuming or is exhausted;
if the residual is really lower or exhausted, the request is denied and the credit card not usable; and
if the residual is still higher, the request is approved and the consume-approval computer is regulated by the Operating Credit Line set in step (b) for consuming usage; and
(d) if Usable Credit consumed, cardholder re-executing step (b) to fill-up consumed Usable Credit by Operating Credit Line, or to amend his Operating Credit Line higher or lower in any time.

2. The method of anti-fraud for credit card according to claim 1, wherein if the card is stolen the cardholder executes step (d) to urgently enter his web page of Personal Credit Management Panel via internet everywhere and amend his personal Operating Credit Line to zero to prevent from card fraud.

3. The method of anti-fraud for credit card according to claim 1, wherein cardholder to enter his web page of Personal Credit Management Panel is through his desk personal computer, smart mobile phone hand sets, notebook computers or PDA over internet.

4. The method of anti-fraud for credit card according to claim 1, wherein cardholder to execute step (b) must sign in web page of Personal Credit Management Panel with his contracted account name and pass words.

5. The method of anti-fraud for credit card according to claim 4, wherein the contracted account name and pass words are one or multiple account names and pass words or digital ID or their mix.

6. The method of anti-fraud for credit card according to claim 1, wherein cardholder execute step (b) with his contracted account name and pass words to enter his web page of Personal Credit Management Panel is required by creditor for one or more identity authentication with one or multiple account name and pass words or digital ID or their mix each time.

7. The method of anti-fraud for credit card according to claim 4, wherein cardholder execute step (b) with his contracted account name and pass words to enter his web page of Personal Credit Management Panel, the contracted account name and pass words are registered specified pass words.

8. The method of anti-fraud for credit card according to claim 7, wherein the registered specified pass words is a specified mobile phone number or specified desktop phone number.

9. The method of anti-fraud for credit card according to claim 1, wherein the web page of Personal Credit Management Panel established in step (a) for every cardholder on creditor's web further comprises:
(a1) a current residual of Maximum Credit Line ;
(a2) a blank column of Operating Credit Line for cardholder placing command on creditor's consume-approval computer; and
(a3) a current residual Usable Credit under the Operating Credit Line after a purchase made.

10. The method of anti-fraud for credit card according to claim 9, wherein the web page of Personal Credit Management Panel further comprises a Maximum Credit Line granted by a creditor.

11. The method of anti-fraud for credit card according to claim 9, wherein the web page of Personal Credit Management Panel on creditor's web installed a button of Credit Re-fillup to restore consumed Usable Credit to the originally set Operating Credit Line by confirming click.

12. The method of anti-fraud for credit card according to claim 9, wherein the web page of Personal Credit Management Panel on creditor's web installed a button of Credit Re-fillup to restore consumed Usable Credit to the sum of current residual Usable Credit plus Operating Credit Line by confirming click.

13. The method of anti-fraud for credit card according to claim 1, wherein the credit card is issued by international processors including VISA, MasterCard, JCB, AMERICAN EXPRESS, Diners Club, Carte Blanche, Enroute, Discover, local bank issuers, and those cards with credit function such as charge card, debt card and transfer card.

14. The method of anti-fraud for credit card according to claim 1, wherein the cardholder executes step (b) may authorize the creditor to set suitable Operating Credit Line with letter authorization.

15. The method of anti-fraud for credit card according to claim 1, wherein the cardholder executes step (d) may authorize the creditor to restore his Usable Credit with letter authorization.
